# EUROPÄISCHE PATENTSCHRIFT

(11) **EP 1 710 109 B1**
(45) Veröffentlichungstag und Bekanntmachung des Hinweises auf die Patenterteilung: **16.05.2012**
(21) Anmeldenummer: 06004439.3
(22) Anmeldetag: 04.03.2006
(51) Int. Cl.: B60J 1/18, B60J 7/12

(54) **Cabriolet-Fahrzeug mit einem Heckfenster**
Convertible vehicle with a rear window
Véhicule convertible avec une fenêtre arrière

(30) Priorität: 06.04.2005 DE 102005015679
(43) Veröffentlichungstag der Anmeldung: 11.10.2006
(73) Patentinhaber: Wilhelm Karmann GmbH, 49084 Osnabrück (DE)
(72) Erfinder: Schramm, Holger, 49143 Bissendorf (DE)
(74) Vertreter: Kronthaler, Schmidt & Coll.

(56) Entgegenhaltungen:
- EP-A- 1 160 109
- DE-A1- 4 129 492
- DE-A1- 10 056 895
- DE-A1- 19 956 801
- DE-U1- 20 002 951

## Beschreibung

Die Erfindung betrifft ein Cabriolet-Fahrzeug mit einem zumindest seitlich und an seinem oberen Rand von flexiblen Bezugbereichen des Daches umgebenen Heckfenster nach dem Oberbegriff des Anspruchs 1

Aus der gattungsgemäßen DE 100 29 471 B4 ist ein Cabriolet-Fahrzeug mit einem sog. Softtop, also einem flexiblen Dachbezug, bekannt, das ein nach unten hin bis zu einem Stoffhaltebügel erstrecktes Heckfenster aufweist. Da dieser Stoffhaltebügel bei der Dachöffnung zunächst aufwärts bewegt wird und sich damit einem hintersten, bei geschlossenem Dach oberhalb der Heckscheibe gelegenen Spriegel annähert, wird in der Dachbewegung der zur Verfügung stehende Raum für das Heckfenster zwischen Stoffhaltebügel und hinterstem Spriegel verkleinert. Um dennoch eine Kollision zwischen einem dieser Teile und dem Heckfenster zu vermeiden, ist dieses relativbeweglich gegenüber seitlich davon gelegenen Bezugbereichen und kann in der Dachbewegung mit seinem unteren Ende den Stoffhaltebügel überragen. Das Heckfenster ist hierfür oberseitig und seitlich von einem U-förmigen Rahmen umgeben. Damit einher geht insbesondere im oberen Bereich das Problem, das der Rahmen einen Teil der Durchsichthöhe durch das schräg stehende Heckfenster verdeck, was insbesondere bei relativ flach stehenden Heckfenstern, wie sie bei sportlichen Autos üblich sind, zu einer in Projektion in eine vertikale Ebene sehr geringen Durchsichthöhe durch die Scheibe führt.

Die DE 199 56 801 A1 zeigt eine fest in den Dachbezug eingebundene Heckscheibe. Zur Verbindung des Innenhimmels mit Hakenteilen, die der Heckscheibe zugeordnet sind, ist eine geschlossene Schlaufe vorgesehen, in die eine separate, quer verlaufende und im Querschnitt quaderförmige Einlage eingebracht ist, die in sich starr ist. Diese Einlage muß eine hohe Stabilität aufweisen und hat daher ein hohes Eigengewicht. Eine Umlenkung zwischen dem Rand und dem weiteren Verlauf des Innenhimmels findet nicht statt. Zudem ragt die in die Schlaufe eingebrachte starre Einlage mehrere Zentimeter nach unten vor, so daß der Durchsichtbereich durch die Heckscheibe an ihrem oberen Rand eingeschränkt wird. Außerdem müssen, um dennoch den Innenhimmel in dieser Stellung auf Zug halten zu können, mehrere Ausnehmungen vorgesehen sein, in die Hakenteile des Heckscheibenrahmens eingreifen können. Die Ausnehmungen müssen gegen ein Ausfransen jeweils separat umnäht werden, so daß der Herstellungsaufwand sehr hoch ist.

Der Erfindung liegt das Problem zugrunde, die Anbindung eines Innenhimmels an ein Cabriolet-Heckfenster, das zumindest oberseitig mit dem Dachbezug verbunden ist, zu verbessern.

Die Erfindung löst dieses Problem durch ein Cabriolet-Fahrzeug mit den Merkmalen des Anspruchs 1. Hinsichtlich weiterer Merkmale und vorteilhafter Weiterbildungen der Erfindung wird auf die Ansprüche 2 bis 11 verwiesen.

Durch die Erfindung ist für ein relativbewegliches Heckfenster der Durchsichtbereich dadurch erhöht, daß die an die im oberen Bereich des Heckfensters befindliche Leiste der Innenhimmel angebunden ist und diese daher nur auf der Innenseite der Heckscheibe erstreckt ist. Dadurch, daß keine Verbindung zu den in der Dachbewegung herauszuhebenden seitlichen Rahmenabschnitten besteht, wirken auf diese Leiste keine hohen Kräfte. Die Leiste kann daher schmal und flach ausgebildet sein. Sie ist auf die Fläche des Heckfensters aufgesetzt und umgreift dieses nicht randseitig. Sofern die Halteaufnahme dem hinteren und unteren Ende des Heckfensters zugewandt ist und der darin gehaltene Innenhimmel über eine Randverdickung gehalten und nach vorne umgelenkt ist und die Leiste verdeckt, ist gleichzeitig die Leiste selbst unsichtbar. Die Sichteinschränkung durch den die Leiste dann nach unten hin übergreifenden Innenhimmel ist zu vernachlässigen, da dieser selbst eine sehr dünne Bezuglage ausbildet.

Sehr günstig ist es, wenn der Bezug im oberen Bereich das Heckfenster außenseitig übergreift, so daß dessen Anbindung nicht über die Leiste bewerkstelligt werden muß und außerdem keine nach unten erstreckte und damit sichteinschränkende Verdickung vorhanden ist.

Insbesondere kann die Leiste eine materialsparende Doppelfunktion aufweisen, indem sie eine zusätzliche Aufnahme für eine Polstermatte des Daches aufweist. Da diese sehr leicht und anders als der äußere Bezug praktisch spannungsfrei gehalten ist, muß die Dimensionierung der Leiste hierfür nicht vergrößert werden.

Dabei kann die Leiste dadurch sehr flach gehalten und somit die Sichteinschränkung dadurch minimiert werden, daß die Halteaufnahme für den Innenhimmel und die Aufnahme für die Polstermatte in einer Ebene parallel zur Erstreckung des Heckfensters gelegen sind. Beide Halteaufnahmen können beispielsweise dann eine flache Aufnahme für einen parallel zum oberen Rand des Heckfensters einzuziehenden Keder umfassen.

Dabei läßt sich die Erstreckung der Leiste nach unten hin deutlich verringern, wenn die Aufnahme für die Polstermatte außerhalb der Erstreckung des Heckfensters, also in Fahrtrichtung vor deren oberer Kante, gelegen ist. Diese Anbindung wirkt daher nahezu nicht durchsichtbeschränkend.

Ein unmittelbares Aufkleben der Leiste auf das Heckfenster verringert weiterhin die benötigte Bauhöhe.

Fertigungstechnisch und kostenseitig ist die Leiste günstig als einstückiges Strangpreßprofil ausgebildet.

Auch seitlich kann die Durchsicht vergrößert werden, indem dort einzelne Bolzen aufgeklebt und von einer aushärtbaren Masse umspritzt sind, die elastisch ist und eine Dichtungsfunktion hat und auf die ein in Doppelfunktion einen seitlichen Rahmenteil des Heckfensters und eine Schrägführung zur Relativbewegung des Heckfensters gegenüber dem umgebenden Stoffbereich ausbildendes Kunststoffspritzteil aufsetzbar ist. Damit müssen auch hier weniger Funktionsteile übereinander auf die Scheibe aufgebracht werden.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:

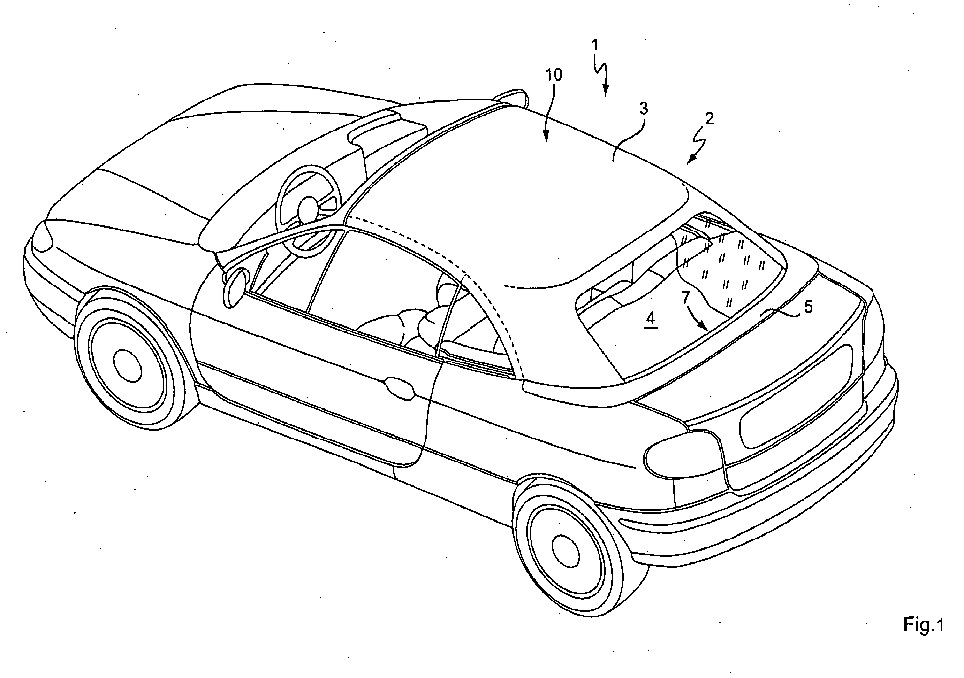

- Fig. 1: eine perspektivische Ansicht eines erfindungsge- mäßen Cabriolet-Fahrzeugs von schräg oben und hinten bei geschlossenem Dach,
- Fig. 2: eine Ansicht auf das sich öffnende Dach mit auf- wärts geschwenktem Stoffhaltebügel aus ähnlicher Perspektive wie Fig. 1,

- Fig. 3: eine perspektivische Einzeldarstellung des Heck- fensters von schräg innen mit oben aufgesetzter Leiste und seitlich aufgesetzten Bolzen,
- Fig. 4: eine perspektivische Darstellung eines Seitenbe- reichs des Heckfensters mit umspritzten Bolzen,
- Fig. 5: eine ähnliche Ansicht wie Fig. 4 mit zusätzlich angesetzten Rahmen- und Führungsteilen für eine Relativbewegung des Heckfensters,

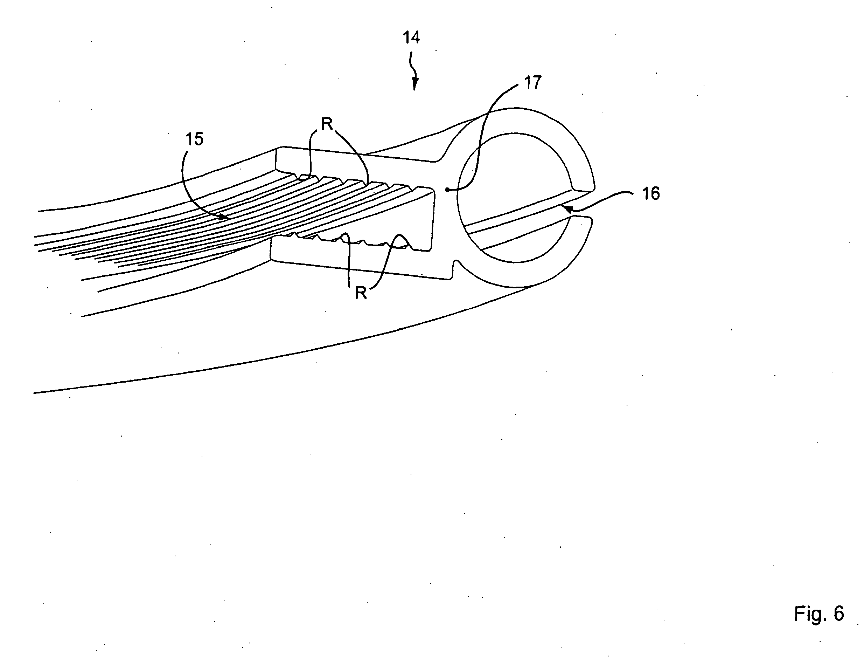

- Fig. 6: eine perspektivische Detailansicht der im oberen Bereich an das Heckfenster anzusetzenden Leiste,
- Fig. 7: eine längs zum Fahrzeug geschnittene Ansicht der montierten Leiste nach Fig. 6,
- Fig. 8: ein Heckfenster in Ansicht von unten mit im lin- ken Teil herkömmlichem U-förmigem Rahmen und im rechten Teil erfindungsgemäßer Ausbildung,

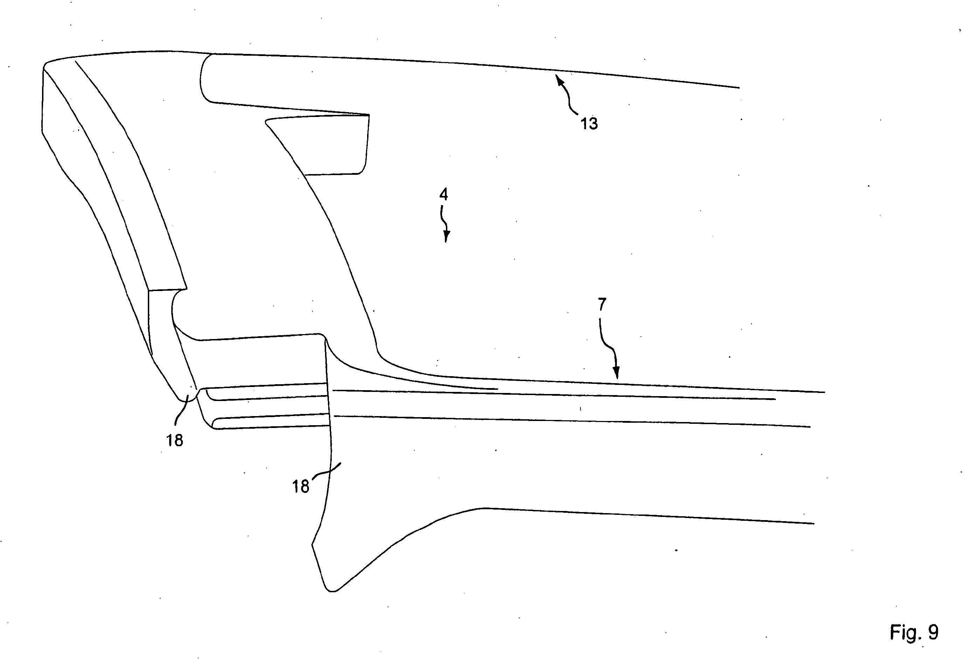

- Fig. 9: einen Verlauf einer das Heckfenster seitlich und an ihrem unteren Rand untergreifenden einstük- kigen Dichtung in Ansicht auf die in Fahrt- richtung untere linke Ecke des Heckfensters,

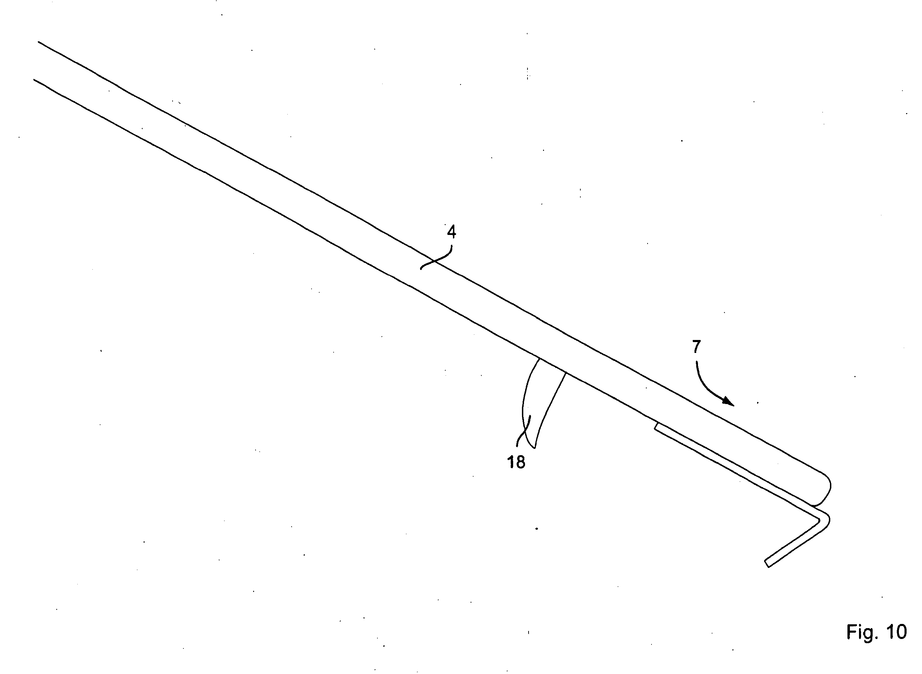

- Fig. 10: eine Seitenansicht des unteren Teils des Heck- fensters mit angeschnittener Dichtung.

Das erfindungsgemäße Teil- oder Voll-Cabriolet-Fahrzeug 1 umfaßt ein Dach 2 mit einem flexiblen Dachbezug 3 zumindest in seinem hinteren, ein Heckfenster 4 umfassenden Abschnitt.

Das Fahrzeug 1 kann sowohl ein Zweisitzer sein als auch einen größeren Innenraum mit zwei oder mehr Sitzreihen hintereinander aufweisen.

Das Dach 2 ist zumindest teilweise beweglich und teilweise oder vollständig zu seiner Öffnung im rückwärtigen Fahrzeugbereich ablegbar. Im gezeichneten Ausführungsbeispiel ist an dem Fahrzeug 1 ein gegenüber der Karosserie bewegliches Deckelteil 5 vorgesehen, auf dem ein rückwärtiger Dachbereich im geschlossenen Dachzustand mit einem das Dach 2 heckwärts begrenzenden und den Bezug 3 spannenden Stoffhaltebügel 6 aufsteht und das bei geöffnetem Dach 2 oberhalb eines Dachaufnahmeraums schließbar ist.

Das Heckfenster 4 muß entsprechend dem gezeichneten Ausführungsbeispiel an seinem unteren Rand 7 nicht fest mit dem Stoffhaltebügel 6 verbunden sein, sondern kann bei geschlossenem Dach 2 mittelbar oder unmittelbar dichtend daran anliegen.

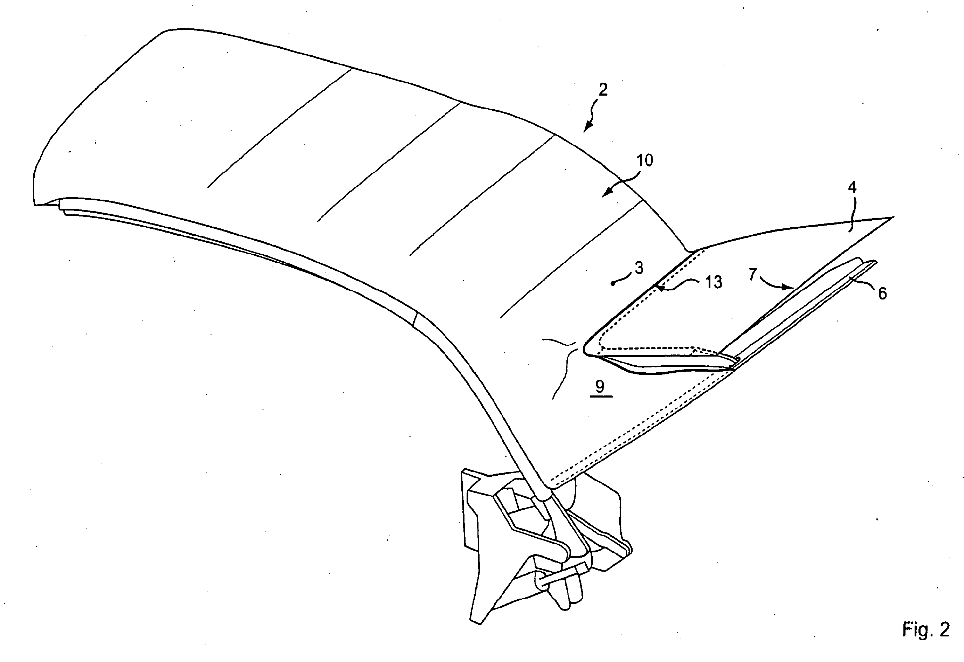

Der Stoffhaltebügel 6 ist zur Dachöffnung aufwärts schwenkbar (Fig. 2), wobei sich in der gezeichneten Version das Heckfenster 4 von diesem löst und ihn mit seinem unteren Rand 7 übergreift. Nach hinreichendem Aufwärtsschwenken des Stoffhaltebügels 6 kann das Deckelteil 5 öffnen, so daß das Dach 2 dann abgesenkt werden kann.

Zur Lösung des Heckfensters 4 von dem Stoffhaltebügel 6 ist das Heckfenster 4 seitlich an entsprechend ausgeformten Kurvenkulissen 8 oder ähnlichen Führungshilfen, wie beispielsweise einer Mehrgelenkmechanik, geführt und löst sich während der Dachöffnung in einer Relativbewegung auch von dieses seitlich umgebenden Bereichen 9 des Bezugs 3 nach oben hin (Fig. 2), so daß es dann bei aufgestelltem Stoffhaltebügel 6 mit seiner unteren Kante 7 über diesen hinausbewegbar ist.

Zur Abdichtung der sich dabei bildenden Öffnungen zwischen dem Heckfenster 4 und den Bezugbereichen 9 ist an jeder Seite jeweils ein hier nur angedeuteter flexibler und spannbarer Stoffloseabschnitt vorgesehen, der häufig auch als Wassertasche bezeichnet wird. Diese kann beispielsweise aus einer oder mehreren Stoffbahn(en) bestehen, die etwa gummiert sein oder wasserabweisend imprägniert sein können.

Der Bezug 3 umfaßt außer einer äußeren Lage 10 einen sog. Innenhimmel 11, der bei geschlossenem Dach 2 den Insassen zugewandt ist, und im gezeichneten Ausführungsbeispiel zusätzlich eine oder mehrere dazwischen angeordnete Polstermatte(n) 12.

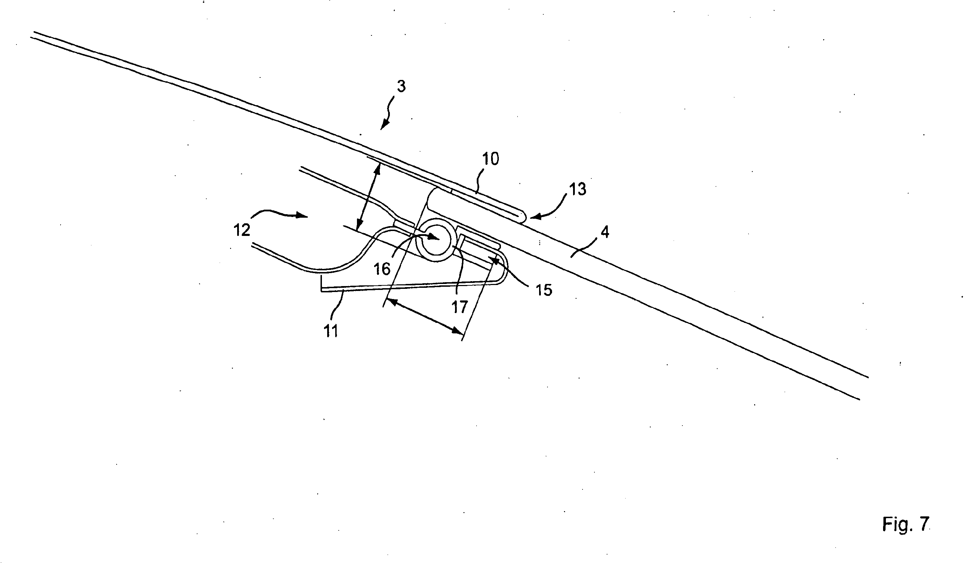

An der oberen und im wesentlichen in Fahrzeugquerrichtung verlaufenden Kante 13 des Heckfensters 4 sind die Bezugteile-Innenhimmel 11 und Polstermatte 12 über eine hier einstückige und durchgehende Leiste 14 halterbar (Fig. 7), wobei auch eine Unterteilung in mehrere hakenartige Einzelabschnitte möglich ist. Die Leiste 14 ist direkt auf die Heckscheibe 4 zum Beispiel randbündig aufgeklebt. In jedem Fall ist die Leiste 14 von seitlichen Anbindungen 15 des Heckfensters 4 separiert. Ein durchgehender Rahmen ist entbehrlich. Die Leiste 14 kann als in sich durchgehendes Strangpreßprofil, etwa aus einer Leichtmetallegierung, gebildet sein.

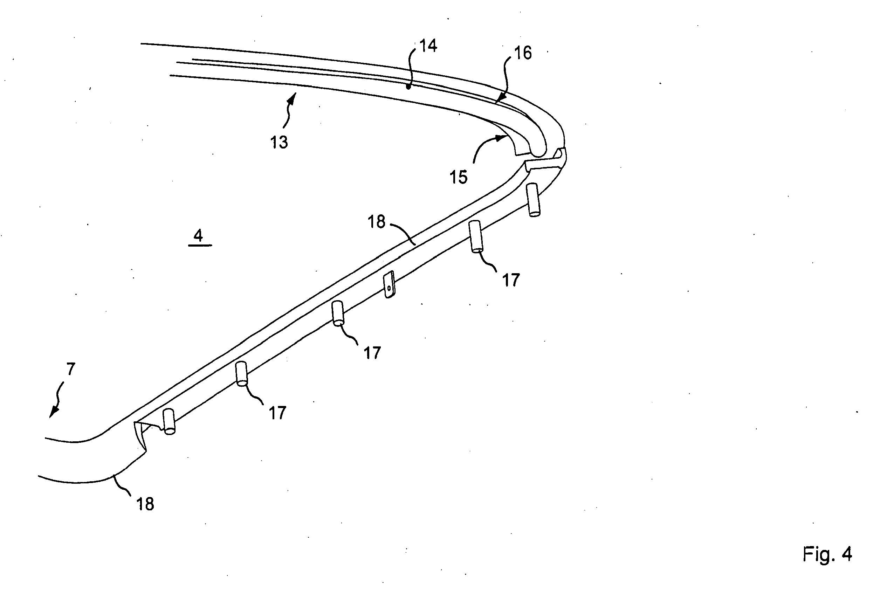

Sie weist zumindest eine Halteaufnahme 15 für den Innenhimmel 11 auf. Diese Halteaufnahme 15 ist hier durch eine im wesentlichen U-förmige und parallel zur Erstreckung des Heckfensters 4 gelegene Öffnung zur Aufnahme eines Keders oder dergleichen Randverdickung des Innenhimmels 11 ausgebildet. Sie kann Rastanformungen als Auszugssicherungen für die eingebrachte Randkante des Innenhimmels 11 aufweisen (Fig. 4). Insbesondere kann der Innenhimmel 11 hierfür mit einer umgeschlagenen Kunststoffleiste an seinem dem der Öffnung 15 der Leiste 14 zugewandten Rand versehen sein. Da die Öffnung 15 mit einer bei geschlossenem Dach 2 nach hinten weisenden Komponente gelegen ist, ist der aus der Öffnung 15 austretende Innenhimmel 11 nach vorne umgeschlagen und überdeckt dadurch die Leiste 14 sowie eine ggf. nach vorne anschließende Polstermatte 12 vollständig.

Der Öffnung 15 gegenüber gelegen ist eine weitere Aufnahme 16 angeordnet, die in der gleichen oder einer leicht parallel versetzten Ebene und somit ebenfalls parallel zur Erstreckung der Heckscheibe 4 gelegen ist (Fig. 7). Diese dient zur Aufnahme eines Keders oder eines anderen verdickten Randabschlusses einer das Dach 2 als Schall- und Wärmedämmung ausfütternden Polstermatte 12. Diese Doppelfunktion der Leiste 14 ist nicht auf ein Fahrzeug 1 mit einem gegenüber den umliegenden Bezugbereichen 9 relativbeweglichen Heckfenster 4 beschränkt, sondern auch für Heckfenster 4 mit einer festen Bezugeinbindung ein erheblicher Gewinn.

Die Höhenerstreckung der Leiste 14 ist bestimmt durch die Höhe der Halteaufnahme 15 und der Aufnahme 16. Eine über deren Höhenerstreckungen hinausgehende Höhe der Leiste 14 ist nicht erforderlich. Diese kann daher sehr flach gehalten sein. Auch in der Breite müssen nur diese beiden Öffnungen 15, 16 mit einem Zwischensteg 17 vorgesehen sein, so daß auch die Breite der Leiste 14 sehr schmal gehalten sein kann. Beides dient dazu, die Sichtbeeinträchtigung nach hinten so gering wie möglich zu halten, was insbesondere bei einer sehr flach stehenden Scheibe 4 relevant ist. Die Breite der Leiste 14 kann damit unter fünf Zentimetern und die Höhe unter zwei Zentimetern liegen.

Für eine optimierte Sicht nach hinten durch das schräg stehende Heckfenster 4 kann die Leiste 14 an dem Heckfenster 4 auch so weit nach oben gerückt werden, daß sie das Heckfenster 4 nach oben überragt, so daß die Aufnahme 16 für die Polstermatte 12 schon außerhalb der Erstreckung des Heckfensters 4 gelegen ist.

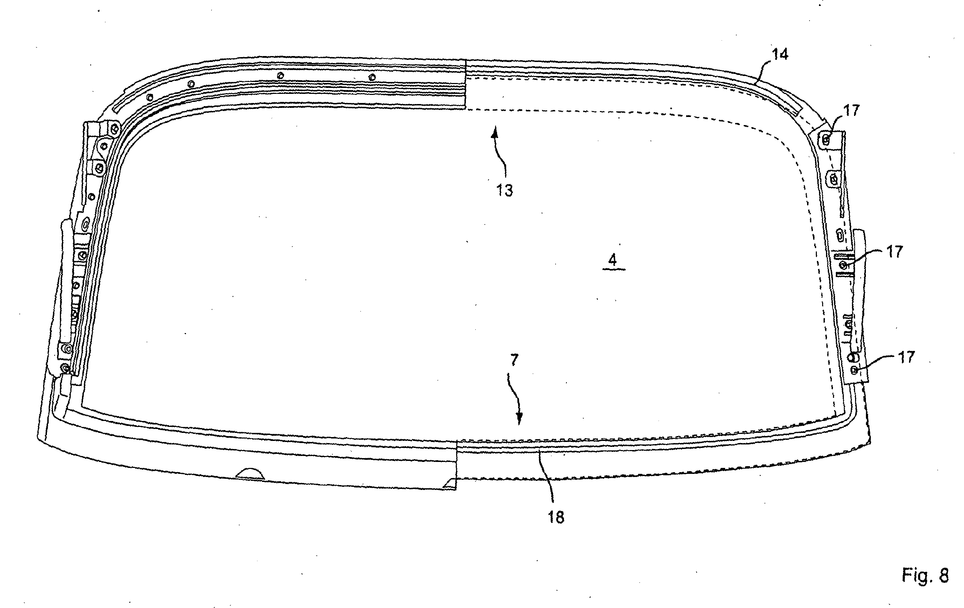

Die äußere Lage 10 des Bezugs 3 des Daches 2 ist an seinem dem oberen Rand 13 des Heckfensters zugewandten Ende umgeschlagen und um-Bug-vernäht, wobei die so gesicherte Randkante außenseitig auf das Heckfenster 4 aufgeklebt (Induktionskleben) sein kann, wie wiederum der Figur 7 zu entnehmen ist. In dieser Figur ist weiter sichtbar, daß die Breite der Leiste 14 auch nicht die Breite der außen auf das Heckfenster 4 befestigten Um-Bug-Vernähung des äußeren Bezugs 10 überragt. Der zusätzlich gewonnene Sichtbereich wird in Fig. 8 deutlich, in der linksseitig eine herkömmliche Rahmenlösung und rechtsseitig die erfindungsgemäße Lösung und demgegenüber gestrichelt die bisherige Lösung eingezeichnet sind. Der dort an der Grenze von herkömmlicher und erfindungsgemäßer Lösung erkennbare Gewinn an Durchsichtfläche hat eine Höhe von über 40 Millimetern.

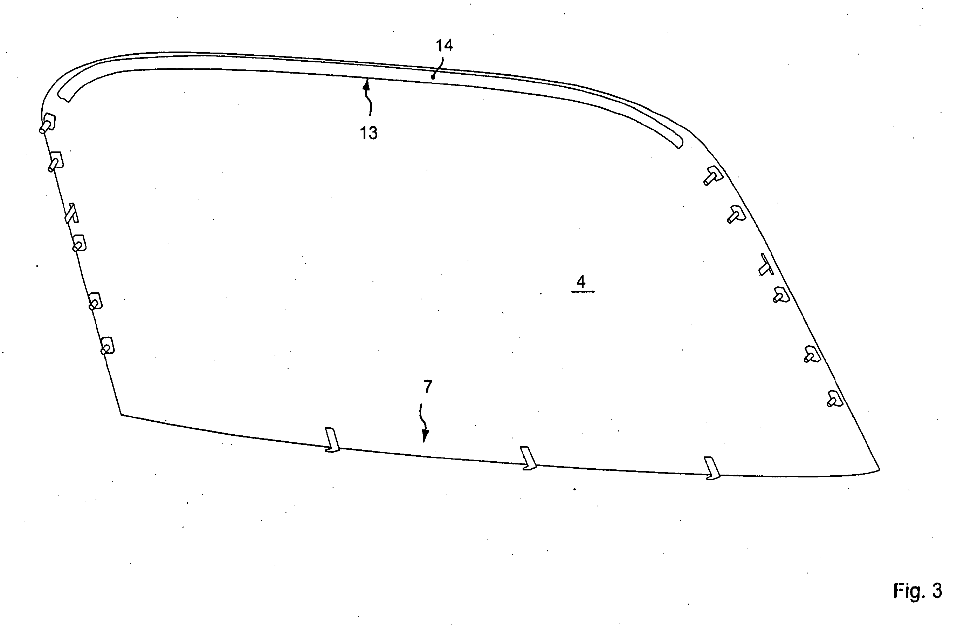

An seitlichen Rändern des Heckfensters 4 ist (Fig. 3) jeweils eine Reihe von Bolzen 17 aufgeklebt (Induktionskleben oder Schweißkleben), die in einem auf ihre Anbringung folgenden Montageschritt zunächst von einer aushärtenden Masse 18 umspritzt werden, die über die Seiten abwärts zum unteren Rand läuft und diesen als elastische Dichtung quer und als ein durchgängiger und dennoch in seiner Höhe variierender (Fig. 4) Dichtungsstrang untergreift.

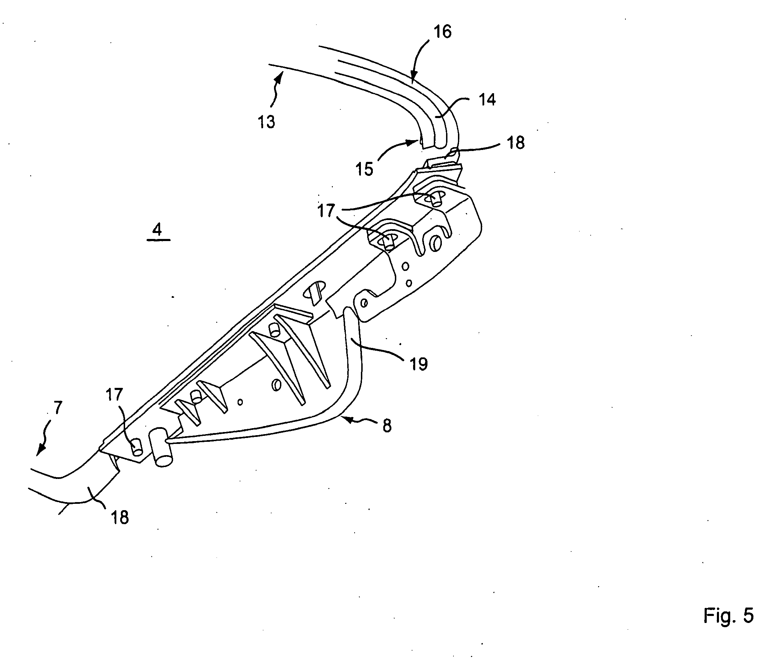

Auf die aushärtbare Dichtungsmasse wird ein einziges Kunststoffspritzteil 19 aufgebracht, das in Doppelfunktion einen seitlichen Rahmenteil des Heckfensters 4 und eine Schrägführung zur Relativbewegung des Heckfensters 4 gegenüber dem umgebenden Stoffbereich 9 ausbildet (Fig. 5), so daß die Fertigung durch Einsparung von Teilen erheblich vereinfacht ist und auch hier ein Durchsichtgewinn von mehr als zehn Millimetern in der Breite entsteht (Fig. 8).

## Patentansprüche

1. Cabriolet-Fahrzeug (1) mit einem zumindest seitlich und an seinem oberen Rand (13) von flexiblen Bezugbereichen (9) des Daches (2) umgebenen Heckfenster (4), an dessen oberem Rand (13) der Bezug (3) angebunden ist, wobei das Heckfenster (4) gegenüber seitlichen Bezugbereichen (9) derart relativbeweglich ist, daß es während der Dachöffnung von diesen nach oben hin lösbar ist,
**dadurch gekennzeichnet,**
**daß** an der Fläche des Heckfensters (4) im Nahbereich seines oberen Randes (13) zumindest eine von seitlichen Anbindungen (17;19) des Heckfensters (4) getrennte Leiste (14) mit einer Halteaufnahme (15) für einen Innenhimmel (11) des Bezugs (3) angeordnet ist, wobei die Halteaufnahme (15) dem hinteren und unteren Ende des Heckfensters (4) zugewandt ist und der darin über eine Randverdickung gehaltene Innenhimmel (11) nach vorne umgelenkt ist und die Leiste (14) verdeckt.

2. Cabriolet-Fahrzeug nach Anspruch 1,
**dadurch gekennzeichnet,**
**daß** die äußere Lage (10) des Bezugs (3) im oberen Bereich das Heckfenster (4) außenseitig übergreift.

3. Cabriolet-Fahrzeug nach einem der Ansprüche 1 oder 2,
**dadurch gekennzeichnet,**
**daß** die Leiste (14) eine zusätzliche Aufnahme (16) für eine Polstermatte (12) des Daches (2) aufweist.

4. Cabriolet-Fahrzeug (1) nach einem der Ansprüche 1 bis 3,
**dadurch gekennzeichnet,**
**daß** dem Heckfenster (4) im Nahbereich seines oberen Randes (13) zumindest eine von seitlichen Anbindungen (17;19) des Heckfensters (4) getrennte Leiste (14) zugeordnet ist, die auf ihrer dem unteren Ende (7) des Heckfensters (4) zugewandten Seite eine Halteöffnung (15) für einen nach vorne umgelenkten Innenhimmel (11) und gegenüberliegend eine Aufnahme (16) für eine Polstermatte (12) des Daches (2) umfaßt, wobei die Aufnahme (16) für die Polstermatte (12) von dem montierten Innenhimmel (11) verdeckt ist.

5. Cabriolet-Fahrzeug nach einem der Ansprüche 3 oder 4,
**dadurch gekennzeichnet,**
**daß** die Halteaufnahme (15) für den Innenhimmel (11) und/oder die Aufnahme (16) für die Polstermatte (12) in einer Ebene parallel zur Erstreckung des Heckfensters (4) gelegen sind.

6. Cabriolet-Fahrzeug nach einem der Ansprüche 3 bis 5,
**dadurch gekennzeichnet,**
**daß** die Aufnahme (16) für die Polstermatte (12) außerhalb der Erstreckung des Heckfensters (4) gelegen ist.

7. Cabriolet-Fahrzeug nach einem der Ansprüche 1 bis 6,
**dadurch gekennzeichnet,**
**daß** die Leiste (14) auf das Heckfenster (4) aufgeklebt ist.

8. Cabriolet-Fahrzeug nach einem der Ansprüche 1 bis 7,
**dadurch gekennzeichnet,**
**daß** die Leiste (14) als einstückiges Strangpreßprofil ausgebildet ist.

9. Cabriolet-Fahrzeug nach einem der Ansprüche 1 bis 8,
**dadurch gekennzeichnet,**
**daß** die Dicke der Leiste (14) unterhalb des Heckfensters die Höhe der Halteaufnahme (15) und/oder der Aufnahme (16) nicht überragt.

10. Cabriolet-Fahrzeug nach einem der Ansprüche 1 bis 9,
**dadurch gekennzeichnet,**
**daß** an seitlichen Rändern des Heckfensters (4) jeweils eine Reihe von Bolzen (17) aufgeklebt ist, die von einer aushärtenden Masse (18) umspritzt sind.

11. Cabriolet-Fahrzeug nach einem der Ansprüche 1 bis 10,
**dadurch gekennzeichnet,**
**daß** auf die aushärtbare Masse (18) ein in Doppelfunktion einen seitlichen Rahmenteil des Heckfensters (4) und eine Schrägführung zur Relativbewegung des Heckfensters (4) ausbildendes Kunststoffspritzteil (19) aufgebracht ist.

## Claims

1. A convertible vehicle (1) comprising a rear window (4) that is surrounded, at least laterally and at its upper edge (13), by flexible cover regions (9) of the roof (2), the cover (3) being connected to the upper edge (13) of the rear window (4) and the rear window (4) being movable relative to lateral cover regions (9) such that it is upwardly detachable from them during the roof opening, **characterised in that**,
on the surface of the rear window (4), in the region close to its upper edge (13), there is at least one moulding (14) separated from lateral connections (17; 19) of the rear window (4) and comprising a holding receptacle (15) for a roof liner (11) of the cover (3), said holding receptacle (15) facing the rear and lower ends of the rear window (4) and the roof liner (11) held therein by a thickened edge portion is turned over forwardly and conceals the moulding (14).

2. The convertible vehicle according to claim 1, **characterised in that** the outer layer (10) of the cover (3) externally engages over the rear window (4) in the upper region.

3. The convertible vehicle according to any one of claims 1 or 2, **characterised in that** the moulding (14) comprises an additional receptacle (16) for a padding mat (12) of the roof (2).

4. The convertible vehicle (1) according to any one of claims 1 to 3, **characterised in that** at least one moulding (14) separated from lateral connections (17; 19) of the rear window (4) is assigned to the rear window (4), in the region close to its upper edge (13), which moulding (14) comprises, on its side facing the lower end (7) of the rear window (4), a retaining opening (15) for a roof liner (11) turned over forwardly and, opposite said retaining opening (15), a receptacle (16) for a padding mat (12) of the roof (2), said receptacle (16) for the padding mat (12) being concealed by the mounted roof liner (11).

5. The convertible vehicle according to any one of claims 3 or 4, **characterised in that** the holding receptacle (15) for the roof liner (11) and/or the receptacle (16) for the padding mat (12) are situated in a plane parallel to the extension of the rear window (4).

6. The convertible vehicle according to any one of claims 3 to 5, **characterised in that** the receptacle (16) for the padding mat (12) is located outside the extension of the rear window (4).

7. The convertible vehicle according to any one of claims 1 to 6, **characterised in that** the moulding (14) is glued onto the rear window (4).

8. The convertible vehicle according to any one of claims 1 to 7, **characterised in that** the moulding (14) is provided as an integral extruded profile.

9. The convertible vehicle according to any one of claims 1 to 8, **characterised in that** the thickness of the moulding (14) below the rear window does not exceed the height of the holding receptacle (15) and/or of the receptacle (16).

10. The convertible vehicle according to any one of claims 1 to 9, **characterised in that** a series of bolts (17) is glued respectively onto lateral edges of the rear window (4), said bolts having a curable mass (18) injected around them.

11. The convertible vehicle according to any one of claims 1 to 10, **characterised in that** an injection-moulded plastic part (19), which serves the double function of forming a lateral frame part of the rear window (4) and an oblique guideway for the relative movement of the rear window (4), is placed on the curable mass (18).

## Revendications

1. Véhicule cabriolet (1), comprenant une lunette arrière (4) qui est entourée, au moins latéralement et à son bord supérieur (13), par des régions de revêtement (9) souples du toit (2), ledit revêtement (3) étant relié audit bord supérieur (13) de la lunette arrière (4) et la lunette arrière (4) étant déplaçable par rapport à des régions de revêtement (9) latérales de manière à pouvoir être détachée de celles-ci vers le haut pendant l'ouverture du toit,
**caractérisé en ce que**
l'on dispose sur la face de la lunette arrière (4), à proximité à son bord supérieur (13), au moins une moulure (14) séparée des connexions latérales (17; 19) de la lunette arrière (4) et comprenant un logement de retenue (15) pour un ciel de toit (11) du revêtement (3), ledit logement de retenue (15) faisant face aux extrémités arrière et inférieure de la lunette arrière (4) et le ciel de toit (11), retenu dans ledit logement de retenue (15) par un bord épaissi, est rabattu vers l'avant et couvre ladite moulure (14).

2. Véhicule cabriolet selon la revendication 1, **caractérisé en ce que** la couche extérieure (10) du revêtement (3) recouvre la lunette arrière (4) extérieurement dans la région supérieure.

3. Véhicule cabriolet selon l'une quelconque des revendications 1 ou 2, **caractérisé en ce que** la moulure (14) comprend un logement additionnel (16) pour une garniture de rembourrage (12) du toit (2).

4. Véhicule cabriolet (1) selon l'une quelconque des revendications 1 à 3, **caractérisé en ce qu'**au moins une moulure (14), séparée des connexions latérales (17; 19) de la lunette arrière (4), est associée à la lunette arrière (4) à proximité de son bord supérieur (13), ladite moulure (14) comprenant, de son côté tourné vers l'extrémité inférieure (7) de la lunette arrière (4), une ouverture de retenue (15) pour un ciel de toit (11) rabattu vers l'avant et, en face de ladite ouverture de retenue (15), un logement (16) pour une garniture de rembourrage (12) du toit (2), ledit logement (16) pour la garniture de rembourrage (12) étant couvert par le ciel de toit (11) monté.

5. Véhicule cabriolet selon l'une quelconque des revendications 3 ou 4, **caractérisé en ce que** le logement de retenue (15) pour le ciel de toit (11) et/ou le logement (16) pour la garniture de rembourrage (12) sont situés dans un plan parallèle à l'extension de la lunette arrière (4).

6. Véhicule cabriolet selon l'une quelconque des revendications 3 à 5, **caractérisé en ce que** le logement (16) pour la garniture de rembourrage (12) est disposé en dehors de l'extension de la lunette arrière (4).

7. Véhicule cabriolet selon l'une quelconque des revendications 1 à 6, **caractérisé en ce que** la moulure (14) est collée sur la lunette arrière (4).

8. Véhicule cabriolet selon l'une quelconque des revendications 1 à 7, **caractérisé en ce que** la moulure (14) est réalisée sous forme d'un profilé extrudé en une seule pièce.

9. Véhicule cabriolet selon l'une quelconque des revendications 1 à 8, **caractérisé en ce que** l'épaisseur de la moulure (14) au-dessous de la lunette arrière n'est pas supérieure à l'hauteur du logement de retenue (15) et/ou du logement (16).

10. Véhicule cabriolet selon l'une quelconque des revendications 1 à 9, **caractérisé en ce qu'**une série de boulons (17) est collée respectivement sur des bords latéraux de la lunette arrière (4), lesdits boulons étant entourés d'une masse durcissable (18) injectée autour de ceux-ci.

11. Véhicule cabriolet selon l'une quelconque des revendications 1 à 10, **caractérisé en ce qu'**une pièce en matière plastique moulée par injection (19), qui sert en même temps à réaliser une partie de cadre latérale de la lunette arrière (4) et un guidage oblique pour le mouvement relatif de la lunette arrière (4), est appliquée sur la masse durcissable (18).
